(19) Europäisches Patentamt
European Patent Office
Office européen des brevets

(11) **EP 3 595 130 B1**

(12) **EUROPEAN PATENT SPECIFICATION**

(45) Date of publication and mention
of the grant of the patent:
**12.01.2022 Bulletin 2022/02**

(21) Application number: **17899572.6**

(22) Date of filing: **10.03.2017**

(51) Int Cl.:
**H02J 50/70** *(2016.01)*    **H02J 50/12** *(2016.01)*

(86) International application number:
**PCT/JP2017/009728**

(87) International publication number:
**WO 2018/163406 (13.09.2018 Gazette 2018/37)**

(54) **RESONANCE-TYPE POWER RECEPTION DEVICE**

RESONANZLEISTUNGSEMPFANGSVORRICHTUNG

DISPOSITIF DE RÉCEPTION D'ÉNERGIE DE TYPE RÉSONANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.01.2020 Bulletin 2020/03**

(73) Proprietor: **Mitsubishi Electric Engineering
Company, Limited
Chiyoda-ku
Tokyo 102-0073 (JP)**

(72) Inventors:
• **AKUZAWA, Yoshiyuki
Tokyo 102-0073 (JP)**
• **MATSUMORI, Hiroshi
Tokyo 102-0073 (JP)**

(74) Representative: **Hoffmann Eitle
Patent- und Rechtsanwälte PartmbB
Arabellastraße 30
81925 München (DE)**

(56) References cited:
**EP-A2- 2 320 538        JP-A- 2011 155 732
JP-A- 2012 120 288      JP-B1- 5 738 497
US-A1- 2013 082 648    US-A1- 2015 022 017
US-A1- 2016 226 312**

## Description

### TECHNICAL FIELD

The present invention relates to a resonance-type power reception device that receives radio frequency power.

### BACKGROUND ART

In a conventional resonance-type power transfer system, in order to suppress interfering waves and decrease in power transfer efficiency which are caused by radiation of a leakage electromagnetic field, each of a transmitting antenna and a receiving antenna is covered with a magnetic shield member (see, for example, Patent Literature 1).

EP 2 320 538 A2 discloses a resonance type non-contact charging system that includes a resonance system. The resonance system has a primary side resonance coil, a secondary side resonance coil, a power converting section having a DC/DC converter, and a battery. The charging system has a controlling section that controls the DC/DC converter. The controlling section controls the duty cycle of the DC/DC converter such that the input impedance of the resonance system at the resonant frequency and the output impedance of a high-frequency power source match each other.

US 2015/0022017 A1 discloses a method of operating a wireless power transmission apparatus that includes receiving information on rectifier output voltages from at least one wireless power reception apparatus; determining whether the rectifier output voltages are within a predetermined operating range, and controlling an impedance of the wireless power transmission apparatus based on a result of the determining.

JP 5 738 497 B1 discloses a resonant coupling power transmission system including a resonance type power transmission device having a resonance type power supply to supply power, and a resonance type transmission antenna to transmit the power supplied by the resonance type power supply, and a resonance type power reception device having a resonance type reception antenna to receive the power transmitted by the resonance type transmission antenna, and a reception circuit to supply the power received by the resonance type reception antenna to a load, and the characteristic impedance of each of the functional units is set in such a way that there is provided a correlation among the resonance characteristic value of the resonance type power supply, that of the resonance type transmission antenna, and that of the resonance type power reception device.

US 2013/0082648 A1 discloses a power receiving device including a resonant coil, an electromagnetic coupling coil, a rectifier circuit, a smoothing circuit, a voltage converter circuit which converts a voltage value of DC power into another voltage value, a control circuit which obtains voltage and current values of the DC power input to the voltage converter circuit, calculates an impedance from the obtained voltage and current values, and generates a pulse width modulation signal for controlling an output voltage and an output current of the voltage converter circuit, and a load to which the output voltage and the output current of the voltage converter circuit are input. The duty ratio of the pulse width modulation signal is determined so that the impedance calculated by the control circuit becomes close to an impedance for the maximum efficiency in transferring the AC power. The power receiving device is included in a contactless power feeding system.

US 2016/0226312 A1 discloses a wireless power reception system provided with: a power reception antenna configured to receive, in a wireless manner, electric power outputted from a power transmission antenna of a power transmitting apparatus; a rectifier electrically connected between the power reception antenna and a load, the load being supplied with the electric power received by the power reception antenna; a constant voltage circuit electrically connected between the rectifier and the load; an obtaining device configured to obtain input impedance associated with the constant voltage circuit; and a controlling device configured to calculate an output adjustment value associated with the power supply on the basis of the obtained input impedance and to transmit the calculated output adjustment value to the power transmitting apparatus.

### CITATION LIST

### PATENT LITERATURES

Patent Literature 1: JP 2012-248747 A

### SUMMARY OF INVENTION

### TECHNICAL PROBLEM

In the conventional configuration, radiation of a leakage electromagnetic field is suppressed using magnetic shield members. In such a configuration, the magnetic shield members need to cover the entire antenna while ensuring a gap with the antennas so as not to block a magnetic field between the transmitting antenna and the receiving antenna. Hence, there is a problem that the transmission device and the reception device cannot be made compact due to the structure.

Further, in the conventional configuration, though radiation of a leakage electromagnetic field generated from the transmitting and receiving antennas is suppressed, generation of a leakage electromagnetic field is not suppressed. In addition, the magnetic shield members cannot be provided in a gap between the transmitting antenna and the receiving antenna. Hence, there is a problem that a leakage electromagnetic field is radiated from this gap portion. The leakage electromagnetic field is higher harmonics of the fundamental wave for power transfer, and also acts as interfering waves over a wide band up to about 1 GHz, and adversely affects the communication frequency band of radios, radio transceivers, mobile phones, or the like.

The present invention is made to solve the above problems, and an object of the invention is to provide a resonance-type power reception device capable of suppressing generation of interfering waves without using a magnetic shield member.

## SOLUTION TO PROBLEM

The present invention provides a resonance-type power reception device, in accordance with claim 1.

## ADVANTAGEOUS EFFECTS OF INVENTION

According to the present invention, as configured in the above-described manner, generation of interfering waves can be suppressed without using a magnetic shield member.

## BRIEF DESCRIPTION OF DRAWINGS

FIG. 1 is a diagram showing an exemplary configuration of a resonance-type power transfer system according to a first embodiment of the invention;
FIGS. 2A to 2C are diagrams describing exemplary operation of an interface power supply (Vo-I/F) of the first embodiment of the invention, and FIG. 2Ais a diagram showing a relationship between mutual inductance M and an input voltage Vin, FIG. 2B is a diagram showing an example of control of an input current Iin, and FIG. 2C is a diagram showing an example of control of an input current Iin' for a case of using a normal DC/DC converter; and
FIG. 3 is a diagram showing an exemplary configuration of a part of a resonance-type power reception device according to a second embodiment of the invention.

## DESCRIPTION OF EMBODIMENTS

Some embodiments of the present invention will be described in detail below with reference to the accompanying drawings.

First Embodiment.

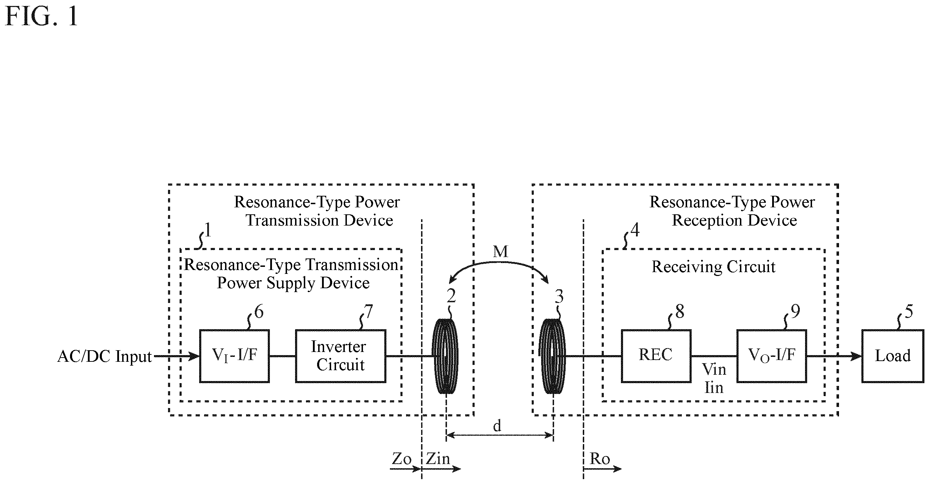

FIG. 1 is a diagram showing an exemplary configuration of a resonance-type power transfer system according to a first embodiment of the invention.

The resonance-type power transfer system includes, as shown in FIG. 1, a resonance-type transmission power supply device 1, a transmitting antenna (TX-ANT) 2, a receiving antenna (RX-ANT) 3, a receiving circuit 4, and a load 5. The resonance-type transmission power supply device 1 includes an interface power supply (VI-I/F) 6 and an inverter circuit 7. The receiving circuit 4 includes a rectifier circuit (REC) 8 and an interface power supply (VO-I/F) 9. The resonance-type transmission power supply device 1 and the transmitting antenna 2 form a resonance-type power transmission device, and the receiving antenna 3 and the receiving circuit 4 form a resonance-type power reception device.

The interface power supply 6 has a function of a converter that increases or decreases a voltage inputted to the resonance-type transmission power supply device 1, and outputs direct current (DC) power. The interface power supply 6 has a function of a DC/DC converter when DC power is inputted to the resonance-type transmission power supply device 1, and has a function of an AC/DC converter when alternating current (AC) power is inputted to the resonance-type transmission power supply device 1. The power obtained by the interface power supply 6 is outputted to the inverter circuit 7.

The inverter circuit 7 converts the power outputted from the interface power supply 6 into radio frequency power having the same ("the same" includes the meaning of "substantially the same") frequency as the resonance frequency of the transmitting antenna 2, and outputs the radio frequency power. The inverter circuit 7 is an inverter circuit of a resonant switching type such as a class-E inverter circuit.

The transmitting antenna 2 resonates at the same ("the same" includes the meaning of "substantially the same") frequency as the frequency of the radio frequency power outputted from the inverter circuit 7, and thereby performs power transfer.

The receiving antenna 3 resonates at the same ("the same" includes the meaning of "substantially the same") frequency as the resonance frequency of the transmitting antenna 2, and thereby receives the radio frequency power transferred from the transmitting antenna 2. The radio frequency power (AC power) received by the receiving antenna 3 is outputted to the rectifier circuit 8.

Note that the power transfer type between the transmitting antenna 2 and the receiving antenna 3 is not particularly limited, and any of a magnetic field resonance-type, an electric field resonance-type, and an electromagnetic induction-type may be used. In addition, the transmitting antenna 2 and the receiving antenna 3 are not limited to contactless antennas such as those shown in FIG. 1.

The rectifier circuit 8 converts the AC power outputted from the receiving antenna 3 into DC power. The DC power obtained by the rectifier circuit 8 is outputted to the interface power supply 9.

The interface power supply 9 has a function of a DC/DC converter that increases or decreases the DC voltage outputted from the rectifier circuit 8. The DC power obtained by the interface power supply 9 is outputted to the load 5.

Further, the interface power supply 9 has a function of controlling an input impedance Zin of the transmitting antenna 2 by controlling an input impedance Ro of the rectifier circuit 8 (the receiving circuit 4) in accordance with mutual inductance M between the transmitting antenna 2 and the receiving antenna 3. Specifically, the interface power supply 9 controls a ratio between the voltage (input voltage) Vin and current (input current) Iin of the above-described DC power to a value proportional to the square of the above-described mutual inductance M. Note that the interface power supply 9 indirectly detects a change in the above-described mutual inductance M on a basis of a change in the above-described input voltage Vin.

The load 5 is a circuit or a device that functions by the DC power outputted from the interface power supply 9.

Next, functions of the interface power supply 9 of the first embodiment will be described.

Here, the output impedance of the inverter circuit 7 is represented as Zo. The input impedance of the transmitting antenna 2 is represented as Zin. The input impedance of the rectifier circuit 8 is represented as Ro. The inductance of the transmitting antenna 2 is represented as $L_{TX}$. The inductance of the receiving antenna 3 is represented as $L_{RX}$. The mutual inductance between the transmitting antenna 2 and the receiving antenna 3 is represented as M. The distance between the transmitting antenna 2 and the receiving antenna 3 is represented as d. The input voltage of the interface power supply 9 is represented as Vin. The input current of the interface power supply 9 is represented as Iin.

Here, the input impedance Zin of the transmitting antenna 2 is represented by the following equation (1). In equation (1), $\omega = 2\pi f$, and f is the transfer frequency.

$$ Zin = (\omega M)^2/Ro \qquad (1) $$

The input impedance Ro of the rectifier circuit 8 is represented by the following equation (2). In equation (2), it is assumed that there is almost no loss in the rectifier circuit 8.

$$ Ro \approx Vin/Iin \qquad (2) $$

From equations (1) and (2), the input impedance Zin of the transmitting antenna 2 is given by the following equation (3):

$$ Zin \approx (\omega M)^2/(Vin/Iin) \qquad (3) $$

The mutual inductance M between the transmitting antenna 2 and the receiving antenna 3 is represented by the following equation (4). In equation (4), K is the coupling coefficient between the inductance $L_{TX}$ of the transmitting antenna 2 and the inductance $L_{RX}$ of the receiving antenna 3, and is in inverse proportion to the distance d between the transmitting antenna 2 and the receiving antenna 3. Thus, when the distance d between the transmitting antenna 2 and the receiving antenna 3 is changed, the mutual inductance M changes.

$$M = K\sqrt{(L_{TX}L_{RX})} \qquad (4)$$

Thus, the interface power supply 9 controls Vin/Iin ($\approx$ Ro) such that Vin/Iin is in proportion to the square of the mutual inductance M. As a result, the input impedance Zin $\approx (\omega M)^2/(Vin/Iin)$ of the transmitting antenna 2 becomes constant.

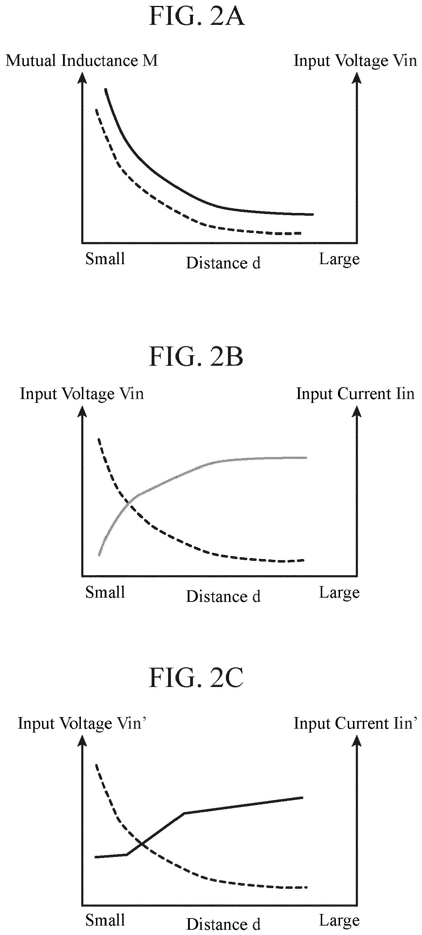

Note that the interface power supply 9 cannot directly detect the mutual inductance M between the transmitting antenna 2 and the receiving antenna 3. Meanwhile, as shown in FIG. 2A, in accordance with the change in the mutual inductance M (a solid line shown in FIG. 2A), the input voltage Vin (a dashed line shown in FIG. 2A) changes. In FIG. 2A, the horizontal axis represents the distance d between the transmitting antenna 2 and the receiving antenna 3, the left vertical axis represents the mutual inductance M, and the right vertical axis represents the input voltage Vin of the interface power supply 9.

Hence, the interface power supply 9 indirectly detects a change in the mutual inductance M by detecting a change in the input voltage Vin. Then, as shown in FIG. 2B, the interface power supply 9 controls the input current Iin (a solid line shown in FIG. 2B) such that the input current Iin changes in inverse proportion to the detected input voltage Vin (a dashed line shown in FIG. 2B). Thus, the interface power supply 9 can control Vin/Iin ($\approx$ Ro). In FIG. 2B, the horizontal axis represents the distance d between the transmitting antenna 2 and the receiving antenna 3, the left vertical axis represents the input voltage Vin of the interface power supply 9, and the right vertical axis represents the input current Iin of the interface power supply 9.

By the above control, the relationship Zo $\approx$ Zin can be maintained and impedance matching between the resonance-type power transmission device and the resonance-type power reception device is achieved, and thus, generation of interfering waves can be suppressed.

FIG. 2C shows a case in which the same control as that performed by the interface power supply 9 is performed using a normal DC/DC converter. In FIG. 2C, the horizontal axis represents the distance d between the transmitting antenna 2 and the receiving antenna 3, the left vertical axis represents the input voltage Vin' of the normal DC/DC converter, and the right vertical axis represents the input current Iin' of the normal DC/DC converter.

As shown in this FIG. 2C, when a normal DC/DC converter is used, the input current Iin' (a solid line shown in FIG. 2C) cannot be controlled such that the input current Iin' changes in inverse proportion to the input voltage Vin' (a dashed line shown in FIG. 2C). This is because in the normal DC/DC converter the input-output conversion efficiency of the DC/DC converter changes in accordance with the level of the input voltage Vin', and thus, due to the influence thereof, the slope of the input current Iin' changes.

On the other hand, the interface power supply 9 has a function of compensating for fluctuations in the input current Iin' (nonlinear characteristics of the input current Iin' with respect to the input voltage Vin') caused by a change in the input-output conversion efficiency of the normal DC/DC converter. As a specific example, in the interface power supply 9, a shunt circuit that increases or decreases the input current Iin in accordance with the level of the input voltage Vin is added, in addition to the function of the normal DC/DC converter. Alternatively, in the interface power supply 9, a series regulator circuit that allows the level of voltage drop to change in accordance with the level of the input voltage Vin is added, in addition to the function of the normal DC/DC converter.

As described above, according to the first embodiment, since the interface power supply 9 is provided that controls the input impedance Ro of the rectifier circuit 8 in accordance with the mutual inductance M between the transmitting antenna 2 and the receiving antenna 3, generation of interfering waves can be suppressed without using a magnetic shield member.

Specifically, in the resonance-type power transfer system, interfering waves are generated due to an input/output impedance mismatch between circuits forming the resonance-type power transmission device and the resonance-type power reception device.

For this, by controlling the input impedance Ro in accordance with the mutual inductance M by the interface power supply 9, the above-described input/output impedance mismatch between the circuits can be overcome, and thus, generation of interfering waves can be suppressed.

In addition, in the resonance-type power transfer system, interfering waves are also generated due to parasitic impedance in each circuit forming the resonance-type power transmission device and the resonance-type power reception device.

For this, by controlling the input impedance Ro in accordance with the mutual inductance M by the interface power supply 9, the above-described input/output impedance mismatch between the circuits can be overcome, and thus, the level of harmonics entering each circuit can be reduced as much as possible. As a result, even if parasitic impedance is present in the circuits, a resonance phenomenon in which harmonics are amplified is reduced. Thus, generation of interfering waves can be suppressed.

Further, in the resonance-type power transfer system, when positional displacement occurs between the transmitting and receiving antennas 2 and 3 due to a change in the position of the resonance-type power reception device, an impedance mismatch occurs between the resonance-type power transmission device and the resonance-type power reception device, and thus, interfering waves are generated.

For this, the interface power supply 9 controls the input impedance Ro in accordance with the mutual inductance M that changes depending on the distance d between the transmitting antenna 2 and the receiving antenna 3. Hence, even if positional displacement occurs between the transmitting and receiving antennas 2 and 3 due to a change in the position of the resonance-type power reception device, impedance matching between the resonance-type power transmission device and the resonance-type power reception device can be maintained, and thus, generation of interfering waves can be suppressed.

Moreover, in the resonance-type power reception device according to the first embodiment, generation of interfering waves is suppressed by circuit design. Hence, a system having high power transfer efficiency with small power loss can be formed. In addition, since a device can be formed without using a magnetic shield member, a reduction in cost, downsizing, and a reduction in weight can be achieved.

Second Embodiment.

The first embodiment shows a case in which the interface power supply 9 controls the input impedance Zin of the transmitting antenna 2 by controlling the input impedance Ro of the rectifier circuit 8 in accordance with the mutual inductance M between the transmitting antenna 2 and the receiving antenna 3. Meanwhile, the input impedance Zin of the transmitting antenna 2 includes not only a real part component R due to pure resistance, but also an imaginary part (reactance) component X due to capacitance C or inductance L. However, the interface power supply 9 of the first embodiment cannot compensate for such an imaginary part component X. Hence, in order for the output impedance Zo of the inverter circuit 7 and the input impedance Zin of the transmitting antenna 2 to match, a resonance-type power reception device according to a second embodiment compensates for the imaginary part component X included in the input impedance Zin.

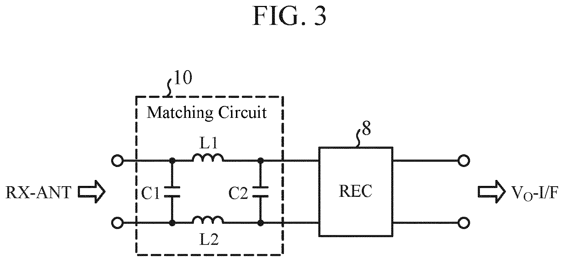

FIG. 3 is a diagram showing an exemplary configuration of a part of the resonance-type power reception device according to the second embodiment of the invention. In the resonance-type power reception device according to the second embodiment shown in this FIG. 3, a matching circuit 10 (capacitors C1 and C2 and inductors L1 and L2) is added to the resonance-type power reception device according to the first embodiment shown in FIG. 1. Other configurations are the same and thus are denoted by the same reference signs and description thereof is omitted.

The matching circuit 10 (capacitors C1 and C2 and inductors L1 and L2) is disposed between the receiving antenna 3 and the rectifier circuit 8, and compensates for the imaginary part component X of the input impedance Zin of the transmitting antenna 2. The matching circuit 10 may be any of a fixed matching type in which the constants of elements included in the matching circuit 10 are fixed, a variable matching type in which the constants of the elements are variable, and an automatic matching type in which matching is achieved by automatically changing the constants of the elements.

One end of the capacitor C1 is connected to one terminal of a pair of input terminals connected to the receiving antenna 3, and the other end of the capacitor C1 is connected to the other terminal of the pair of input terminals.

One end of the inductor L1 is connected to the one end of the capacitor C1.

One end of the inductor L2 is connected to the other end of the capacitor C1.

One end of the capacitor C2 is connected to the other end of the inductor L1 and one terminal of a pair of input terminals included in the rectifier circuit 8, and the other end of the capacitor C2 is connected to the other end of the inductor L2 and the other terminal of the pair of input terminals.

Here, the input impedance Zin of the transmitting antenna 2 is represented by the following equation (5):

$$Zin = R + X = \sqrt{(R^2 + (\omega L - (1/\omega C))^2)} \qquad (5)$$

Then, the matching circuit 10 compensates for the imaginary part component X of the input impedance Zin of the transmitting antenna 2 by a combination of the capacitors C1 and C2 and the inductors L1 and L2. By this, an effect of suppressing generation of interfering waves is enhanced comparing with the first embodiment.

The above description shows a case in which the matching circuit 10 includes all of the capacitors C1 and C2 and the inductors L1 and L2. However, no limitation is intended, and the matching circuit 10 may include at least any one of the capacitors C1 and C2 and the inductors L1 and L2. For example, the matching circuit 10 may include only the capacitor C1, or may include only the capacitor C2 and the inductors L1 and L2, or may include only the capacitor C1 and the inductors L1 and L2.

The design of elements included in the matching circuit 10 is determined by, for example, simulating the value of the input impedance Zin upon designing a system, or actually measuring the input impedance Zin after designing a system.

**INDUSTRIAL APPLICABILITY**

Resonance-type power reception devices according to the present invention can suppress generation of interfering waves without using a magnetic shield member, and are suitable for use as resonance-type power reception devices that receive radio frequency power, etc.

**REFERENCE SIGNS LIST**

1: Resonance-type transmission power supply device, 2: Transmitting antenna (TX-ANT), 3: Receiving antenna (RX-ANT), 4: Receiving circuit, 5: Load, 6: Interface power supply (Vi-I/F), 7: Inverter circuit, 8: Rectifier circuit (REC), 9: Interface power supply (Vo-I/F), and 10: Matching circuit.

**Claims**

1. A resonance-type power reception device comprising:

   a receiving antenna (3) configured to receive power transferred from a transmitting antenna (2); and
   a receiving circuit (4) configured to control an input impedance (Zin) of the transmitting antenna in accordance with mutual inductance (M) between the transmitting antenna (2) and the receiving antenna (3), wherein
   the receiving circuit (4) includes:

      a rectifier circuit (8) configured to convert the power received by the receiving antenna (3) into direct current power; and
      an interface power supply (9) configured to control a ratio between a voltage (Vin) and a current (Iin) of the direct current power obtained by the rectifier circuit (8) to a value proportional to a square of the mutual inductance (M).

2. The resonance-type power reception device according to claim 1, wherein the interface power supply (9) is configured to indirectly detect a change in the mutual inductance (M) from a change in the voltage (Vin) of the direct current power.

3. The resonance-type power reception device according to claim 1, further comprising a matching circuit (10) disposed between the receiving antenna (3) and the receiving circuit (4) and configured to compensate for an imaginary part component of an input impedance (Zin) of the transmitting antenna (2).

4. The resonance-type power reception device according to claim 3, wherein the matching circuit (10) includes at least one of an inductor (L1, L2) and a capacitor (C1, C2).

5. The resonance-type power reception device according to claim 1, wherein the receiving antenna (3) is configured to perform power transfer with the transmitting antenna (2) by magnetic field resonance, electric field resonance, or electromagnetic induction.

**Patentansprüche**

1. Resonanzleistungsempfangsvorrichtung, umfassend:

   eine Empfangsantenne (3), welche konfiguriert ist, um von einer Sendeantenne (2) übertragene Leistung zu empfangen; und
   eine Empfangsschaltung (4), welche konfiguriert ist, um eine Eingangsimpedanz (Zin) der Sendeantenne in Übereinstimmung mit gegenseitiger Induktivität (M) zwischen der Sendeantenne (2) und der Empfangsantenne (3) zu steuern, wobei
   die Empfangsschaltung (4) beinhaltet:

      eine Gleichrichterschaltung (8), welche konfiguriert ist, um die durch die Empfangsantenne (3) empfangene Leistung in Gleichstromleistung umzuwandeln; und
      eine Schnittstellenstromversorgung (9), welche konfiguriert ist, um ein Verhältnis zwischen einer Spannung (Vin) und einem Strom(Iin) der durch die Gleichrichterschaltung (8) erhaltenen Gleichstromleistung auf einen Wert zu steuern, welcher proportional zu einem Quadrat der gegenseitigen Induktivität (M) ist.

**2.** Resonanzleistungsempfangsvorrichtung nach Anspruch 1, wobei die Schnittstellenstromversorgung (9) konfiguriert ist, um eine Änderung in der gegenseitigen Induktivität (M) aus einer Änderung der Spannung (Vin) der Gleichstromleistung indirekt zu erkennen.

**3.** Resonanzleistungsempfangsvorrichtung nach Anspruch 1, weiter eine Anpassungsschaltung (10) umfassend, welche zwischen der Empfangsantenne (3) und der Empfangsschaltung (4) angeordnet und konfiguriert ist, um eine Imaginäranteilkomponente einer Eingangsimpedanz (Zin) der Sendeantenne (2) auszugleichen.

**4.** Resonanzleistungsempfangsvorrichtung nach Anspruch 3, wobei die Anpassungsschaltung (10) zumindest eines von einer Spule (L1, L2) und einem Kondensator (C1, C2) beinhaltet.

**5.** Resonanzleistungsempfangsvorrichtung nach Anspruch 1, wobei die Empfangsantenne (3) konfiguriert ist, um Leistungsübertragung mit der Sendeantenne (2) durch Magnetfeldresonanz, Resonanz des elektrischen Feldes oder elektromagnetische Induktion durchzuführen.

## Revendications

**1.** Dispositif de réception d'énergie de type à résonance comprenant :

une antenne de réception (3) configurée pour recevoir une énergie transférée depuis une antenne d'émission (2) ; et
un circuit de réception (4) configuré pour commander une impédance d'entrée (Zin) de l'antenne d'émission selon une inductance mutuelle (M) entre l'antenne d'émission (2) et l'antenne de réception (3), dans lequel le circuit de réception (4) inclut :

un circuit redresseur (8) configuré pour convertir l'énergie reçue par l'antenne de réception (3) en énergie en courant continu ; et
une alimentation en énergie d'interface (9) configurée pour commander un rapport entre une tension (Vin) et un courant(Iin) de l'énergie en courant continu obtenue par le circuit redresseur (8) à une valeur proportionnelle à un carré de l'inductance mutuelle (M).

**2.** Dispositif de réception d'énergie de type à résonance selon la revendication 1, dans lequel l'alimentation en énergie d'interface (9) est configurée pour détecter indirectement un changement de l'inductance mutuelle (M) à partir d'un changement de la tension (Vin) de l'énergie en courant continu.

**3.** Dispositif de réception d'énergie de type à résonance selon la revendication 1, comprenant en outre un circuit d'adaptation (10) disposé entre l'antenne de réception (3) et le circuit de réception (4) et configuré pour compenser une composante de partie imaginaire d'une impédance d'entrée (Zin) de l'antenne d'émission (2).

**4.** Dispositif de réception d'énergie de type à résonance selon la revendication 3, dans lequel le circuit d'adaptation (10) inclut au moins l'un d'une bobine d'inductance (L1, L2) et d'un condensateur (C1, C2).

**5.** Dispositif de réception d'énergie de type à résonance selon la revendication 1, dans lequel l'antenne de réception (3) est configurée pour effectuer un transfert d'énergie avec l'antenne d'émission (2) par résonance de champ magnétique, résonance de champ électrique ou induction électromagnétique.

# FIG. 1

EP 3 595 130 B1

# FIG. 2A

Mutual Inductance M                    Input Voltage Vin

Small          Distance d          Large

# FIG. 2B

Input Voltage Vin                    Input Current Iin

Small          Distance d          Large

# FIG. 2C

Input Voltage Vin'                    Input Current Iin'

Small          Distance d          Large

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2320538 A2
- US 20150022017 A1
- JP 5738497 B
- US 20130082648 A1
- US 20160226312 A1
- JP 2012248747 A